# EUROPEAN PATENT APPLICATION

(11) **EP 4 685 533 A1**
(43) Date of publication of application: **28.01.2026**
(21) Application number: 24191126.2
(22) Date of filing: 26.07.2024
(51) Int. Cl.: G02B 6/10, G02B 5/00

(54) **MICRODRONE, MICRODRONE SYSTEM, USE OF THE MICRODRONE OR OF THE MICRODRONE SYSTEM FOR TRAPPING AND TRANSPORTING A PARTICLE, AND METHOD OF FABRICATING A MICRODRONE**

(71) Applicant: Julius-Maximilians-Universität Würzburg, in Vertretung des Freistaates Bayern, 97070 Würzburg (DE)
(72) Inventor: Hecht, Bert, 97299 Zell am Main (DE); Qin, Jin, 97218 Gerbrunn (DE); Wu, Xiaofei, 97218 Gerbrunn (DE)
(74) Representative: Lucke, Andreas

(57) **Abstract**

A microdrone is adapted to, selectively under illumination, trap and transport a particle. The microdrone comprises a plurality of motion-promoting antenna structures and a trapping-field-promoting antenna structure. The plurality of motion-promoting antenna structures comprises a first motion-promoting antenna structure and a second motion-promoting antenna structure. Each of the first and the second motion-promoting antenna structures exhibits a respective optically addressable resonance at a respective first resonance wavelength. Each of the first and the second motion-promoting antenna structures is adapted to scatter incoming, circularly polarized light at the respective first resonance wavelength such that at least a fraction of a momentum of the incoming, circularly polarized light is transferred to the microdrone. The trapping-field-promoting antenna structure exhibits an optically addressable resonance at a second resonance wavelength. The trapping-field-promoting antenna structure is adapted to provide, under illumination with incoming light at the second wavelength, a gradient force directed at the trapping-field promoting antenna structure both for left-handed circularly polarized incoming light at the second wavelength and for right-handed circularly polarized incoming light at the second wavelength.

## Description

### TECHNICAL FIELD

The disclosure relates to a microdrone providing a selective, or, in other words, optically controllable, movement under illumination with circularly polarized light as well as an optically controllable trapping of a nanoparticle, and more specifically to a microdrone with antenna structures adapted to achieve the respective functions.

### BACKGROUND

In nanotechnology, a critical challenge is the transport and delivery of cargo in liquid media. Traditionally, optical tweezers have been used for this purpose. Optical tweezers have demonstrated proficiency in handling objects with diameters of several micrometers. However, their capabilities are significantly limited when dealing with nanoparticles (i.e., particles having an extension of < 1 µm along any direction). The problems have been attributed to limitations of the trapping potential imposed by the diffraction limit and to a lack of precise control over the orientation of the nanoparticle.

Techniques to induce particle rotation, such as utilizing a rotating linear polarization or a chirality-dependent absorption of circularly polarized light, have been explored. However, their applicability is complicated by their high requirements to the spatial control over the light field.

Alternative approaches modify the nanoparticle structurally to achieve a better optical control, for example by attaching a large handle to the nanoparticle. Then, the modified particle rather than a nanoparticle is optically controlled in a multi-trap configuration. In situ removal of the large handle after the transport is typically not possible.

Plasmonic holograms have been used to introduce subwavelength positioning precision, but the spatial range is very limited.

Beyond optical forces, alternative mechanisms, such as magnetic, thermal-hydrodynamic, and electro-thermo-plasmonic forces have been investigated to extend the long-range transport capabilities of optical tweezers. However, the developed techniques require special working environments or particle materials.

Thus, it remains challenging to provide a reliable trapping of a single nanoparticle for its transport, and to deliver the nanoparticle to a particular position with a predefined orientation.

### OVERVIEW

In view of the technical problems laid out above, there is a need for improvements in nanoparticle trapping and transport. This objective is achieved with a microdrone according to claim 1, a microdrone system according to claim 11, a use of the microdrone or of the microdrone system according to claim 12, and a method of fabricating a microdrone according to claim 14. The dependent claims refer to advantageous embodiments.

According to a first aspect, a microdrone is adapted to, selectively under illumination, trap and transport a particle. The microdrone comprises a plurality of motion-promoting antenna structures and a trapping-field-promoting antenna structure. The plurality of motion-promoting antenna structures comprises a first motion-promoting antenna structure and a second motion-promoting antenna structure. Each of the first and the second motion-promoting antenna structures exhibits a respective optically addressable resonance at a respective first resonance wavelength. Each of the first and the second motion-promoting antenna structures is adapted to scatter incoming, circularly polarized light at the respective first resonance wavelength such that at least a fraction of a momentum of the incoming, circularly polarized light is transferred to the microdrone. The trapping-field-promoting antenna structure exhibits an optically addressable resonance at a second resonance wavelength. The trapping-field-promoting antenna structure is adapted to provide, under illumination with incoming light at the second wavelength, a gradient force directed at the trapping-field promoting antenna structure both for left-handed circularly polarized incoming light at the second wavelength and for right-handed circularly polarized incoming light at the second wavelength.

The respective microdrone combines the motion-promoting antenna structures to implement a propulsion system for the microdrone, and the trapping-field-promoting antenna structure to optically trap a particle, particularly a nanoparticle. Advantageously, the respective antenna structures may be sub-wavelength-sized (referring to the optical wavelength of the illumination in vacuum) structures, such that they are sufficiently small to arrange them on the microdrone. Even more advantageously, because of the small (e.g., sub-micrometer) sizes of the respective antennae, the location of the nanoparticle trapped and/or transported by the microdrone is controlled to a high (e.g., sub-micrometer) accuracy.

Moreover, the respective microdrone provides straightforward optical control over both trapping and transport of the nanoparticle. In particular, the motion-promoting antenna structures may be provided such that the forces driving the propulsion of the microdrone, and consequently the transport of the trapped nanoparticle, depend on the helicity of the illuminating light. In contrast, the forces driving the trapping of the nanoparticle are present for either helicity of the illuminating light or even independent of the helicity of the illuminating light. They are preferably independent of the polarization in general of the illuminating light, but depend solely on the intensity of the illuminating light. Hence, both the transport and the trapping may be controlled by controlling the helicity and the intensity of the illuminating light.

The first wavelength may be the same as the second wavelength. In respective embodiments, the microdrone may be controlled using a single light source (typically a laser) for the illumination of both the motion-promoting antenna structures and the trapping-field-promoting antenna structure, simplifying the system and reducing its cost.

Alternatively, the first wavelength and the second wavelength may differ. Respective embodiments provide additional control over propulsion and trapping, for example, by controlling the intensities (e.g., switching on/off) of the incoming light at the respective wavelengths independently.

In combination with the motion-promoting antenna structures, the trapping-field-promoting antenna structure does not only allow for moving a nanoparticle to a desired position, but also providing it at said position with a (pre-)defined orientation. This is another major advantage over existing approaches, wherein the orientation of the transported particle often remains uncontrolled.

Moreover, the respective antenna structures may be provided in the form of resonant plasmonic antennae, which provide sufficient forces for propulsion of the microdrone and for optically trapping a nanoparticle even under moderate illumination intensity. This is a major advantage over optical tweezers, which require stronger light field gradients, and thus stronger light fields, with decreasing size of the particles to be controlled. The described microdrone can trap and transport a nanoparticle at a light intensity (i.e., intensity of the incoming, illuminating light in the absence of the microdrone) suitable for non-destructive handling of sensitive nanoparticles.

In the context of this disclosure, selectively trapping a particle under illumination may refer to holding the particle on/to the microdrone under illumination, wherein the forces that cause the holding are switched off when the illumination is switched off.

The surface of the microdrone may be coated or treated to promote a release of the particle when the illumination is switched off, in particular in a vicinity of the trapping-field-promoting antenna structure.

In the context of this disclosure, selectively transporting a particle under illumination may refer to inducing a movement of the particle along a predefined direction under illumination, wherein the forces that cause the movement are switched off when the illumination is switched off.

The first motion-promoting antenna structure may extend along a first plane or along a plurality of first planes parallel to each other.

In respective embodiments, the first motion-promoting antenna structure may not have a continuous or discrete rotational symmetry around any axis perpendicular to the first plane.

The second motion-promoting antenna structure may extend along a second plane or along a plurality of second planes parallel to each other.

In respective embodiments, the second plane may be parallel to the first plane or to at least one of the first planes; and/or the second motion-promoting antenna structure may not have a continuous or discrete rotational symmetry around any axis perpendicular to the second plane.

The plurality of motion-promoting antenna structures may comprise at least four or at least six or at least eight or at least ten or at least twelve motion-promoting antenna structures.

The trapping-field-promoting antenna structure may extend along a third plane.

In respective embodiments, around any axis perpendicular to the third plane, the trapping-field-promoting antenna structure may not have a two-fold rotational symmetry as its highest rotational symmetry.

The trapping-field-promoting antenna structure may have at least a three-fold rotational symmetry around an axis perpendicular to the third plane.

In alternative embodiments, the trapping-field-promoting antenna structure has a shape with a two-fold rotational symmetry around an axis perpendicular to the third plane. However, embodiments with an at least a three-fold rotational symmetry around an axis perpendicular to the third plane provide more efficient particle trapping.

In some embodiments, the trapping-field-promoting antenna structure is shaped to provide, under illumination with light at the second resonance frequency, a localized near-field enhancement or a near-field gradient for particle trapping. The location of the localized near-field enhancement or of the near-field gradient may be referred to as a hot spot.

The third plane may be parallel or coplanar to the first plane or to at least one of the first planes, and/or may be parallel or coplanar to the second plane or to at least one of the second planes.

The trapping-field-promoting antenna structure, or, if a plurality of respective trapping-field-promoting antenna structures are comprised in the microdrone, an arrangement of the plurality of trapping-field-promoting antenna structures, may have a center of mass which coincides with a center of mass of the microdrone and/or which is located above a center of mass of the microdrone.

Respective embodiments avoid that the weight of a transported nanoparticle induces a torque onto a moving microdrone, such that the microdrone can be steered more reliably.

The first resonance wavelength of the first motion-promoting antenna structure and the first resonance wavelength of the second motion-promoting antenna structure may be essentially equal to each other, for example within +/- 10% or within +/- 5% or within +/- 3% or within +/- 1% of the first resonance wavelength of the first motion-promoting antenna structure. Alternatively, the first resonance wavelength of the first motion-promoting antenna structure and the first resonance wavelength of the second motion-promoting antenna structure may differ from each other, for example by at least +/- 1% or by at least +/- 3% or by at least +/- 5% or by at least +/- 10% of the first resonance wavelength of the first motion-promoting antenna structure.

The first resonance wavelength of the first motion-promoting antenna structure and/or the first resonance wavelength of the second motion-promoting antenna structure may essentially equal the second resonance wavelength, for example within +/- 10% or within +/- 5% or within +/- 3% or within +/- 1% of the second resonance wavelength.

Each of the motion-promoting antenna structures may be shaped to, for incoming, circularly polarized light at the first resonance wavelength of the respective motion-promoting antenna structure with said incoming light having a light propagation direction, scatter said incoming light to a well-defined direction, wherein a component of the well-defined direction along a plane perpendicular to the light propagation direction depends on the helicity of said incoming light, and wherein, optionally, the light propagation direction is perpendicular to a plane along which the respective motion-promoting antenna structure extends.

The trapping-field-promoting antenna structure and/or each of the motion-promoting antenna structures may have a width of no more than 5 µm or no more than 2 µm or no more than 1 µm.

The first motion-promoting antenna structure and the second motion-promoting antenna structure, together, may be adapted to drive a motion of the microdrone according to a first degree of freedom under illumination with circularly polarized light having a first helicity, and to drive a motion of the microdrone according to a second degree of freedom different from the first degree of freedom under illumination with circularly polarized light having a second helicity opposite to the first helicity.

The design of the microdrone allows, in a straightforward manner, controlling several degrees of freedom of the microdrone. For example, the first and the second motion-promoting antenna structures may be arranged opposite to each other with respect to a center of mass of the microdrone. In respective embodiments, when the first and the second motion-promoting antenna structures are illuminated with a helicity inducing parallel forces at both the first and the second motion-promoting antenna structure, the resulting torques onto the microdrone cancel each other resulting in a net torque of essentially zero, such that the microdrone undergoes a translational movement (first degree of freedom). In contrast, if the first and the second motion-promoting antenna structures are illuminated with a helicity inducing antiparallel forces at both the first and the second motion-promoting antenna structure, the resulting forces onto the microdrone cancel each other resulting in a net force of essentially zero, such that the microdrone undergoes a rotational movement (second degree of freedom). To achieve full control over the various degrees of freedom of the movement, motion-promoting antenna structures with differing first resonance wavelengths are beneficial.

The first resonance wavelength of the first motion-promoting antenna structure and/or the first resonance wavelength of the second motion-promoting antenna structure may differ from the second resonance wavelength, for example by at least +/- 1% or by at least +/- 3% or by at least +/- 5% or by at least +/- 10% of the second resonance wavelength.

Respective embodiments allow controlling the propulsion/movement of the microdrone and the trapping of the nanoparticle independently, using two different light sources (typically lasers) operating at two different wavelengths, i.e., at the first resonance wavelength and at the second resonance wavelength.

The plurality of motion-promoting antenna structures may comprise a third motion-promoting antenna structure and a fourth motion-promoting antenna structure. Each of the third and the fourth motion-promoting antenna structures may exhibit a respective optically addressable resonance at a respective first resonance wavelength, and may be adapted to scatter incoming, circularly polarized light at the respective first resonance wavelength such that at least a fraction of a momentum of the incoming, circularly polarized light is transferred to the microdrone.

Preferably, the first resonance wavelengths of at least two or all of the following differ from each other: the first motion-promoting antenna structure, the second motion-promoting antenna structure, the third motion-promoting antenna structure, and the fourth motion-promoting antenna structure. For example, they may differ from each other by at least +/- 1% or by at least +/- 3% or by at least +/- 5% or by at least +/- 10% of the first resonance wavelengths of the first motion-promoting antenna structure, of the second motion-promoting antenna structure, of the third motion-promoting antenna structure, or of the fourth motion-promoting antenna structure.

Respective embodiments allow controlling the propulsion/movement of the microdrone along different spatial directions independently, using several light sources (typically lasers) operating at the different (first) resonance wavelengths of the motion-promoting antenna structures.

The trapping-field-promoting antenna structure may be arranged at a distance from the first motion-promoting antenna structure and/or from the second motion-promoting antenna structure, in particular, at a distance of at least 0.2 µm or of at least 0.4 µm or of at least 0.6 µm.

A respective distance reduces the risk of cross-talk between the respective antenna structures, which might otherwise result in the electromagnetic field of one the respective antenna structures arriving at the other. It thus helps to ensure that the propulsion/movement of the microdrone and the trapping of the nanoparticle can be controlled independently.

The trapping-field-promoting antenna structure may be shaped to provide, under illumination with incoming light at the second wavelength, both for left-handed circularly polarized incoming light and for right-handed circularly polarized incoming light at the second wavelength, a near field with an enhanced field gradient as compared to a field gradient of the incoming light at the second wavelength prior to impinging on the trapping-field-promoting antenna structure. In respective embodiments, the near field with the enhanced field gradient may provide the gradient force directed at the center of the trapping-field promoting antenna structure.

Said gradient force may be directed at a center of the trapping-field promoting antenna structure.

The trapping-field-promoting antenna structure may be adapted to provide, under illumination with the incoming light at the second wavelength, a gradient force directed at the trapping-field promoting antenna structure both for incoming light at the second wavelength having a first linear polarization and for incoming light at the second wavelength having a second linear polarization perpendicular to the first linear polarization.

In other words, the trapping-field-promoting antenna structure may be adapted to provide said gradient force, and hence the trapping of the nanoparticle, independent of the polarization of the incoming light (both of the helicity and, in case of linearly polarized light, of the linear polarization). Hence, the trapping is selectively optically controlled by the intensity of the incoming light, and the polarization of the incoming light may be used for controlling the propulsion/movement of the microdrone.

The trapping-field-promoting antenna structure may have a shape corresponding to an n-fold spoke structure, wherein n is at least three.

The trapping-field-promoting antenna structure may comprise a number n of elements extending away from a center of the trapping-field-promoting antenna structure, wherein n is at least three. Preferably, the n elements extend in a plane.

In alternative embodiments, the trapping-field-promoting antenna structure has a shape corresponding to a single element having a tipped shape or to two single elements each having a tipped shape. However, the n-fold spoke structure, wherein n is at least three, is beneficial for an improved particle trapping, as it provides a localized and more homogeneous (i.e., towards any direction) trapping potential.

The trapping-field-promoting antenna structure may have a shape corresponding to a cross, and/or the trapping-field-promoting antenna structure may comprise four elements extending away from a center of the trapping-field-promoting antenna structure. Preferably, the four elements extend in a plane.

In any of the embodiments described above, said elements may have a tipped shape, preferably towards a same region, for example towards a region forming a gap. Said region may define a trapping position for the particle.

The trapping-field-promoting antenna structure may comprise a conductive, semiconductive, or dielectric material forming said shape and/or elements, wherein, preferably, the conductive, semiconductive, or dielectric material is a conductive material.

The motion-promoting antenna structures, e.g., the first, second, third, and/or fourth motion-promoting antenna structure, may have a corresponding material composition.

The trapping-field-promoting antenna structure may further comprise a gap at its center. In respective embodiments, the gap may correspond to a region not comprising the conductive, semiconductive, or dielectric material, wherein, preferably, the conductive, semiconductive, or dielectric material is a conductive material.

The gap may have a width of no more than 100 nm or no more than 60 nm or no more than 40 nm.

According to some embodiments, the trapping-field-promoting antenna structure comprises a conductive, semiconductive, or dielectric material, and said shape and/or elements correspond(s) to regions surrounded by the conductive, semiconductive, or dielectric material. In respective embodiments, the conductive, semiconductive, or dielectric material is preferably a conductive material; and/or said shape and/or elements correspond(s) to a region/regions not comprising the conductive, semiconductive, or dielectric material.

The microdrone may be adapted to, selectively under illumination, trap and transport a diamond particle with a diameter of 70 nm.

The microdrone may be adapted to, selectively under illumination, trap and transport the particle in solution and/or at a temperature of the trapping-field-promoting antenna structure of at least 274 K.

The microdrone may comprise a substrate that the plurality of motion-promoting antenna structures and the trapping-field-promoting antenna structure are formed on or in.

The substrate may extend along a plane, and the substrate may have a thickness perpendicular to the plane, wherein the thickness is smaller than the extension of the substrate along any direction within the plane and/or the thickness is in a range from 20 nm to 10 µm.

The substrate may be transparent at the second resonance wavelength and/or at the first resonance wavelength of the first and/or of the second motion-promoting antenna structure, for example with a transmittance of at least 30% or of at least 50% or of at least 70% or of at least 85%.

Along any spatial direction, an extension of the substrate and/or of the microdrone may not exceed 1 mm or may not exceed 0.1 mm or may not exceed 0.03 mm.

The substrate may extend along a plane, wherein said plane is parallel, and optionally coplanar, to the first plane and/or to the second plane and/or to the third plane described above.

According to another aspect, a microdrone system comprises the microdrone according to any of the embodiments described above, and a light source system. The light source system comprises at least one light source, wherein the light source system is adapted to illuminate the microdrone with light of controllable intensity at the second resonance wavelength and to illuminate the microdrone with light of controllable helicity at the first resonance wavelength of the first motion-promoting antenna structure and at the first resonance wavelength of the second motion-promoting antenna structure.

The first wavelength and/or the second wavelength and/or the third wavelength may refer to the respective wavelength in air or in vacuum.

Another aspect refers to a use of the microdrone or of the microdrone system according to any of the embodiments described above for, selectively under illumination, trapping and transporting a particle.

According to an embodiment, a helicity and an intensity of the illumination are controlled to control a motion of the microdrone, and the trapping of the particle is controlled using the intensity of the illumination. In respective embodiments, the particle is preferably trapped and transported in solution.

A helicity of the illumination may be controlled to control a motion of the microdrone, and an intensity of the illumination may be controlled to control the trapping of the particle.

Preferably, the particle is trapped and transported in solution.

The first motion-promoting antenna structure and the second motion-promoting antenna structure may be smaller than the first wavelength.

The trapping-field-promoting antenna structure may be smaller than the second wavelength.

Another aspect refers to a method of fabricating a microdrone adapted to, selectively under illumination, trap and transport a particle. The method comprises forming a plurality of motion-promoting antenna structures and forming a trapping-field-promoting antenna structure. The motion-promoting antenna structures comprise a first motion-promoting antenna structure and a second motion-promoting antenna structure. Each of the first and the second motion-promoting antenna structures exhibits a respective optically addressable resonance at a respective first resonance wavelength, and is adapted to scatter incoming, circularly polarized light at the respective first resonance wavelength such that at least a fraction of a momentum of the incoming, circularly polarized light is transferred to the microdrone. The trapping-field-promoting antenna structure exhibits an optically addressable resonance at a second resonance wavelength. The trapping-field-promoting antenna structure is adapted to provide, under illumination with incoming light at the second wavelength, a gradient force directed at a center of the trapping-field promoting antenna structure both for left-handed circularly polarized incoming light at the second wavelength and for right-handed circularly polarized incoming light at the second wavelength.

According to some embodiments, the plurality of motion-promoting antenna structures and the trapping-field-promoting antenna structure are formed from a same material.

According to some embodiments, the method comprises at least one common fabrication step contributing to both forming the plurality of motion-promoting antenna structures and forming the trapping-field-promoting antenna structure. Optionally, in the at least one common fabrication step a material of the plurality of motion-promoting antenna structures and a material of the trapping-field-promoting antenna structure is deposited and/or shaped synchronously.

According to some embodiments, the method comprises providing a substrate. In respective embodiments, the plurality of motion-promoting antenna structures may be formed on or in the substrate and/or the trapping-field-promoting antenna structure may be formed on or in the substrate.

Preferably, the substrate may have a shape with a bottom surface of the substrate being larger than any side surface of the substrate, and wherein the trapping-field-promoting antenna structure is formed on the bottom surface of the substrate or on a top surface of the substrate opposite to the bottom surface.

### BRIEF DESCRIPTION OF THE FIGURES

The techniques of the present disclosure and the advantages associated therewith will be best apparent from a description of exemplary embodiments in accordance with the accompanying drawings, in which:
- Fig. 1: illustrates a microdrone according to an embodiment;
- Fig. 2a, Fig. 2b: illustrate the transfer of at least a fraction of the momentum of incoming, circularly polarized light to the microdrone by scattering;
- Fig. 3a, Fig. 3b: illustrate the near field enhancement and the gradient force at the trapping-field-promoting antenna structure under illumination;
- Fig. 4a: illustrates a microdrone according to an alternative embodiment;
- Fig. 4b: illustrates a microdrone according to an alternative embodiment;
- Fig. 5a - Fig. 5d: illustrate motion-promoting antenna structures of microdrones according to different embodiments;
- Fig. 6a - Fig. 6d: illustrate trapping-field-promoting antenna structures of microdrones according to different embodiments;
- Fig. 7: illustrates the selective trapping and transporting of a nanoparticle under illumination;
- Fig. 8: illustrates a microdrone system according to an embodiment; and
- Fig. 9: illustrates a method of fabricating a microdrone according to an embodiment.

### DETAILED DESCRIPTION OF EMBODIMENTS

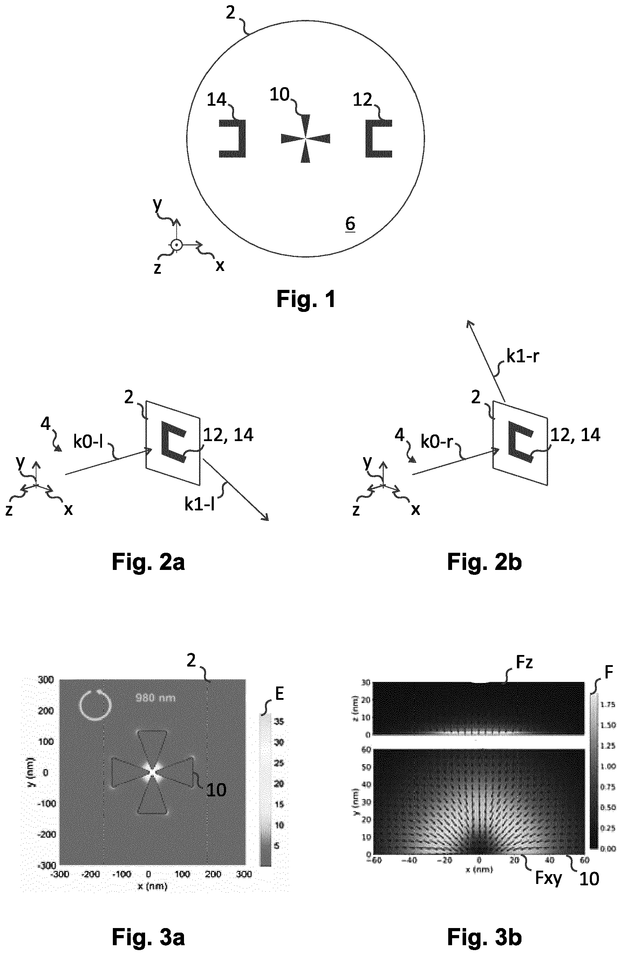

Fig. 1 gives a top view (i.e., along the z direction from a positive z value towards a negative z value) of a microdrone 2 according to an embodiment.

The microdrone 2 according to the depicted embodiment has the shape of a disc, or of a cylinder, respectively, with a diameter of 3.5 µm (i.e., in the x-y plane) and a height of 0.15 µm (i.e., along the z direction). The microdrone 2 has a mass of 3.8 pg.

In other words, a substrate 6 of the microdrone 2 has the respective shape. The substrate 6 is made from hydrogen silsesquioxane, a transparent, electrically insulating (or non-conductive, respectively) material 22.

The microdrone 2 comprises two motion-promoting antenna structures 12, 14 and a trapping-field-promoting antenna structure 10.

In the depicted embodiment, said antenna structures 10, 12, 14 are made from gold. An alternative material 22 is possible, for as long as it provides a conductance or a dielectric polarizability larger than the one of the substrate 6. An electrically conductive material 22 is preferred.

In the depicted embodiment, said antenna structures 10, 12, 14 are arranged on the substrate 6 of the microdrone 2. In alternative embodiments (not shown), the motion-promoting antenna structures 12, 14 are arranged inside of the substrate 6 of the microdrone 2. In other words, a layer of material of the substrate 6 of the microdrone 2 is formed over the motion-promoting antenna structures 12, 14.

A thin layer of material of the substrate 6 may also be formed over the trapping-field-promoting antenna structure 10, however, the thickness of the respective material layer should be smaller than the decay length of an optical near field that forms at the trapping-field-promoting antenna structure 10 under illumination, such that said near field can extend outside of the microdrone 2 for trapping a nanoparticle 24.

In the depicted embodiment, the antenna structures 10, 12, 14 are planar, and each of them extends in a plane parallel to the x-y plane. In other words, each of the antenna structures 10, 12, 14 extends in a plane perpendicular to the z-axis. In the depicted embodiment, the antenna structures 10, 12, 14 are coplanar to facilitate an efficient fabrication of the microdrone 2.

In alternative embodiments (not shown) the antenna structures 10, 12, 14 are arranged at different positions along the z direction. In respective embodiments, the motion-promoting antenna structures 12, 14 can be arranged inside of the substrate 6, above, or below the substrate 6, whereas the trapping-field-promoting antenna structure 10 is formed above/over the substrate 6.Notably, according to some embodiments (not shown), any of the motion-promoting antenna structures 12, 14 is not formed along a single x-y plane, or in a single layer parallel to the x-y plane, respectively, but is formed in multiple layers parallel to the x-y plane, as described in Fig. 11a, Fig. 11b and the corresponding description of WO 2023/094369 A1. While the microdrone 2 depicted in Fig. 1 with the motion-promoting antenna structures 12, 14 each in a single plane parallel to the x-y plane is configured to allow for motional control in the x-y plane, embodiments with the motion-promoting antenna structures 12, 14 formed in multiple layers parallel to the x-y plane, as described in Fig. 12 and the corresponding description of WO 2023/094369 A1, are configured to allow for motional control along the z direction and for pitch and roll movements/rotations out of the x-y-plane, or around an axis in the x-y-plane, respectively.

According to some embodiments (not shown), the motion-promoting antenna structures 12, 14 formed in multiple layers parallel to the x-y plane, and thus the motional control along the z direction, are implemented instead of the antenna structures 12, 14 formed along the single x-y plane depicted in Fig. 1. According to alternative embodiments (not shown), the motion-promoting antenna structures 12, 14 formed in multiple layers parallel to the x-y plane, and thus the motional control along the z direction, are implemented in addition to the motion-promoting antenna structures 12, 14 formed along the single x-y plane as depicted in Fig. 1, thus allowing for motional control along all spatial directions. An example of a microdrone 2 according to the latter embodiment is given in Fig. 12 and the corresponding description of WO 2023/094369 A1.

The motion-promoting antenna structures 12, 14 serve to provide a propulsion of the microdrone 2 selectively when the motion-promoting antenna structures 12, 14 are illuminated, as will be laid out below in more detail in the context of Fig. 2a, Fig. 2b.

The trapping-field-promoting antenna structure 10 serves to provide an attractive force for trapping a particle 24 selectively when the trapping-field-promoting antenna structure 10 is illuminated, as will be laid out below in more detail in the context of Fig. 3a, Fig. 3b.

In the depicted embodiment, the trapping-field-promoting antenna structure 10 is located above the center of mass of the microdrone 2. In other words, a line parallel to the z axis exists, which intersects both the center of mass of the microdrone 2 and the trapping-field-promoting antenna structure 10. Consequently, when a particle 24 is held by the trapping-field-promoting antenna structure 10, the weight of the particle 24 does not result in a torque around said line parallel to the z axis. This improves the stability of the movement of the microdrone 2 when transporting a particle 24 using the trapping-field-promoting antenna structure 10. However, alternative embodiments (not shown) with the trapping-field-promoting antenna structure 10 located at a position different from the one above the center of mass of the microdrone 2 are possible.

In the depicted embodiment, the motion-promoting antenna structures 12, 14 are arranged opposite to each other with respect to the center of mass of the microdrone 2, or with respect to a first line parallel to the z axis intersecting the center of mass of the microdrone 2, respectively. In other words, when a second line is constructed through the first motion-promoting antenna structure 12 and perpendicular to said first line parallel to the z axis intersecting the center of mass of the microdrone 2, and a reference plane is constructed perpendicular to said second line and comprising the center of mass of the microdrone 2, the first motion-promoting antenna structure 12 and the second motion-promoting antenna structure 14 are arranged on opposite sides of said plane.

Consequently, the motion-promoting antenna structures 12, 14 can be used to induce a torque onto the microdrone 2, or a rotation of the microdrone 2, respectively, namely, when the motion-promoting antenna structures 12, 14 are illuminated to generate antiparallel forces.

Moreover, the motion-promoting antenna structures 12, 14 can be illuminated to generate parallel forces, thus generating a net force onto the microdrone 2, or a translational movement of the microdrone 2, respectively.

Thus, the motion-promoting antenna structures 12, 14, in combination, are configured to provide two independent degrees of freedom of the microdrone 2, namely a rotation around the z axis and a linear translation along a direction perpendicular to the z axis.

According to some embodiments, the microdrone 2 is similar to the microdrone described in WO 2023/094369 A1, i.e., is similar to the microdrone of any of the embodiments described in WO 2023/094369 A1. More specifically, according to some examples, the substrate 6 of the microdrone 2 is formed like the substrate of the microdrone according to any of the embodiments of WO 2023/094369 A1, and/or the motion-promoting antenna structures 12, 14, 16, 18 are formed like the nanoantennas according to any of the embodiments of WO 2023/094369 A1. For details regarding the physical principles that are made use of to selectively induce the translation or the rotation of the microdrone 2 under illumination with circularly polarized light 4, reference is made to WO 2023/094369 A1.

WO 2023/094369 A1 is incorporated herein by reference.

In the depicted embodiment, the motion-promoting antenna structures 12, 14 are arranged along the x direction, and are adapted to provide a linear translation along the y direction under suitable illumination with circularly polarized light 4.

Notably, the coordinate system referred to in Fig. 1 and in the other figures is fixed to the microdrone 2 and moves with it. For example, if the microdrone 2 of Fig. 1 is rotated counterclockwise by 90°, the x direction will thereafter point upwards in the plane of the drawing, and the y direction will point to the left. The motion-promoting antenna structures 12, 14 will still be arranged along the x direction.

In alternative embodiments, the microdrone 2 comprises a second pair of motion-promoting antenna structures (not shown in Fig. 1) similar to the motion-promoting antenna structures 12, 14. The respective second pair of motion-promoting antenna structures is arranged along the y axis and is adapted to provide a linear translation along the x direction. In other words, the arrangement of the second pair of motion-promoting antenna structures corresponds to the arrangement of the motion-promoting antenna structures 12, 14, rotated by 90° around a line parallel to the z axis through the center of mass of the microdrone 2.

To summarize, the described propulsion concept allows for an optically controllable movement of the microdrone 2 in any desired direction, i.e., it allows for an optically controllable translational movement along any desired direction and for an optically controllable rotational movement around any desired axis, by placing the described motion-promoting antenna structures on/in the microdrone 2 accordingly.

Fig. 2a and Fig. 2b illustrate the transfer of at least a fraction of the momentum of incoming, circularly polarized light 4 to the microdrone 2.

As mentioned above, the propulsion concept corresponds to the one described in detail in WO 2023/094369 A1, or, more specifically, the motion-promoting antenna structures 12, 14, 16, 18 correspond to the nanoantennas of WO 2023/094369 A1. In other words, according to different embodiments, the motion-promoting antenna structures 12, 14, 16, 18 are formed according to any of the embodiments of WO 2023/094369 A1.

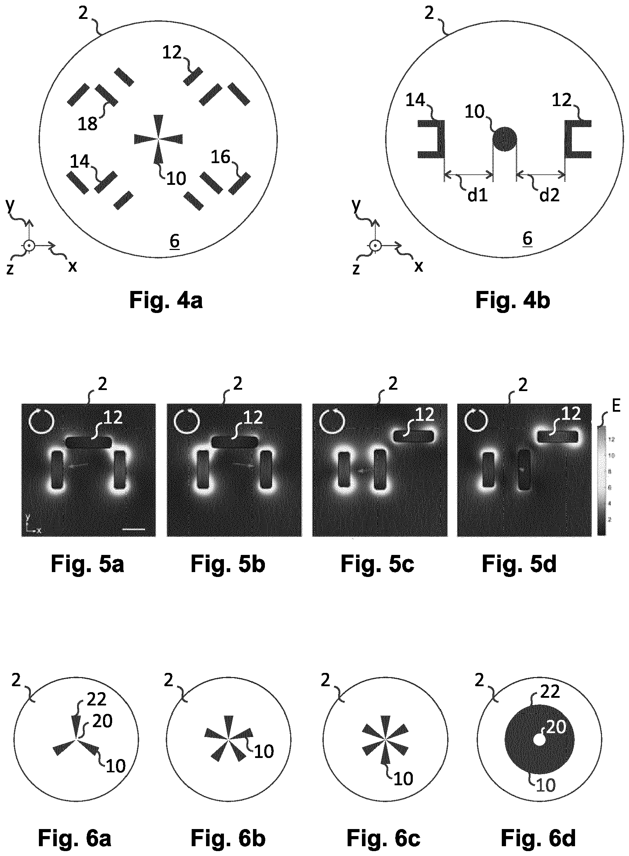

As an example, Fig. 2a and Fig. 2b illustrate the propulsion concept described in detail in WO 2023/094369 A1 in the context of Fig. 5a and corresponding pars. [0140] - [0143] and in the context of the embodiments of Fig. 1a - Fig. 1d and corresponding pars. [0112] - [0118]. The respective parts of WO 2023/094369 A1 are incorporated herein by reference.

For illustrative purposes, Fig. 2a and Fig. 2b show only one of the motion-promoting antenna structures 12, 14. The respective motion-promoting antenna structure 12, 14 extends along the x-y plane.

The motion-promoting antenna structure 12, 14 does not have a rotational symmetry around any axis z perpendicular to said x-y plane, i.e., neither a discrete nor a continuous rotational symmetry.

Consequently, when the motion-promoting antenna structure 12, 14 is illuminated with incoming, circularly polarized light 4 having a k-vector with a component ko-l, ko-r along the z axis (the z axis being perpendicular to the x-y plane along which the motion-promoting antenna structure 12, 14 extends), said incoming light 4 is scattered into a well-defined direction in terms of its projection onto the x-y plane.

In other words, the motion-promoting antenna structure 12, 14 is shaped such that circularly polarized incoming light 4, even if its k-vector ko-l, ko-r has a component of zero in the x-y plane (along which the motion-promoting antenna structure 12, 14 extends), is scattered such that the k-vector k1-l, k1-r of the resulting scattered light has a non-zero component in the x-y plane. More specifically, the antenna structure 12, 14 depicted in Fig. 1, Fig. 2a, and Fig. 2b is designed to scatter incoming circularly polarized incoming light 4 such that the k-vector k1-l, k1-r of the resulting scattered light is orientated parallel or antiparallel to the y-axis, depending on the helicity of the incoming circularly polarized incoming light 4.

The well-defined direction, or the non-zero component of the k-vector k1-l, k1-r of the scattered light in the x-y plane, respectively, depends on the helicity, or on the direction of rotation, respectively, of the incoming, circularly polarized light 4. In other words, the well-defined direction, or the non-zero component of the k-vector k1-l, k1-r of the scattered light in the x-y plane, respectively, is different for incoming, circularly polarized light 4 of positive and negative helicity, or of left-handed (i.e., counterclockwise) circular polarization and of right-handed (i.e., clockwise) circular polarization, respectively.

As shown in Fig. 2a, incoming, left-handed circularly polarized light 4 (i.e., incoming, circularly polarized light 4 of a first helicity) with a k-vector k0-l is scattered into a direction corresponding to the k-vector k1-l of the scattered light. In other words, momentum is transferred from the light 4 to the microdrone 2, with the transferred momentum corresponding to the inverse of the difference of the k-vector k1-l after the scattering minus the k-vector ko-1 prior to the scattering. The transferred momentum results in a force acting on the microdrone 2 at the position of the motion-promoting antenna structure 12, 14, with the direction of the force being opposite to said difference of the k-vectors k1-l - k0-l.

As shown in Fig. 2b, incoming, right-handed circularly polarized light 4 (i.e., incoming, circularly polarized light 4 of a second helicity opposite to the first helicity) with a k-vector kor is scattered into a direction k1-r, corresponding to the direction of the k-vector of the resulting scattered light. This direction is different from the direction k1-l of the scattered left-handed circularly polarized light 4. More specifically, the projection of the k-vector k1-r of the k-vector of the scattered light onto the x-y plane differs from the projection of the k-vector k1-l of the k-vector of the scattered light of the first helicity onto the x-y plane.

Consequently, the motion-promoting antenna structure 12, 14 can be applied to generate a force acting on the microdrone 2, the force having a first direction or a second direction (being different from the first direction), depending on the helicity of the incoming, right-handed circularly polarized light 4.

Referring back to the microdrone 2 of Fig. 1, the depicted microdrone 2 comprises two motion-promoting antenna structures 12, 14. The position and orientation of the second motion-promoting antenna structure 14 corresponds to the position and orientation of the first motion-promoting antenna structure 12, with a 180° rotation around a line parallel to the axis z through the center (e.g., the center of mass) of the microdrone 2.

First, and for illustrative purposes, an embodiment is considered in which the motion-promoting antenna structures 12, 14 have the same (first) resonance frequency, or the same (first) resonance wavelength, respectively. Here and in the following, any wavelength that reference is made to refers to the respective wavelength in vacuum (or, alternatively, in air). As illustrated in Fig. 2a, illuminating the microdrone 2 of Fig. 1 with left-handed circularly polarized light 4 at this resonance wavelength results in a first force at the first motion-promoting antenna structure 12 with a negative component along the y direction, and in a second force at the second motion-promoting antenna structure 14 with a positive component along the y direction.

In embodiments wherein the motion-promoting antenna structures 12, 14 have the same shape (except for being displaced and/or rotated with respect to each other) and material composition and hence the same (first) resonance frequencies and absorption cross sections for the incoming light 4, the net force (i.e., the sum) resulting from the first force and the second force is zero. However, the net torque (i.e., the sum of the torque resulting from the first force and the torque resulting from the second force) around the line through the center of mass of the microdrone 2 parallel to the axis z is nonzero, giving rise to a rotation of the microdrone 2 around said line. The sign of the net torque, or the direction of the rotation, respectively, is reversed when the helicity, or the direction of rotation, respectively, of the incoming, circularly polarized light 4 is reversed.

In alternative, preferred embodiments, the motion-promoting antenna structures 12, 14 have different (first) resonance wavelengths. Hence, any of the motion-promoting antenna structures 12, 14 can be addressed individually, even when the entire microdrone 2 is illuminated, by selecting the frequency, or wavelength, respectively, of the incoming light 4 according to the respective (first) resonance wavelength.

This is beneficial over concepts wherein the incoming light 4 is focused onto a single one of the motion-promoting antenna structures 12, 14, as the microdrone 2 moves during operation, making the focusing onto a single motion-promoting antenna structures 12, 14 challenging.

In embodiments with different (first) resonance wavelengths, magnitude and direction of the first force at the first motion-promoting antenna structure 12 and of the second force at the second motion-promoting antenna structure 14 can be controlled independently by adjusting the intensity and helicity of the incoming light 4 at the respective first resonance wavelength. In particular, the intensity and helicity of the incoming light 4 at the respective first resonance wavelengths can be adjusted such that the net torque resulting from the first force at the first motion-promoting antenna structure 12 and from the second force at the second motion-promoting antenna structure 14 vanishes, whereas the net force resulting from the first force and the second force (i.e., their sum) is non-zero. A respective control of the incoming light 4 drives a linear movement of the microdrone 2, with a net torque around the z axis or around any line perpendicular thereto of essentially zero.

The motion-promoting antenna structures 12, 14 depicted in Fig. 1 are arranged in/on the microdrone 2 along the x axis to provide a linear movement along the y axis. As described above, in alternative embodiments, an additional pair of motion-promoting antenna structures (not shown) is arranged in/on the microdrone 2 along the y axis to provide a linear movement of the microdrone 2 along to x axis. The respective additional pair of motion-promoting antenna structures preferably each have (first) resonance wavelengths different from the (first) resonance wavelengths of each of the motion-promoting antenna structures 12, 14.

In yet alternative embodiments, yet an additional pair of motion-promoting antenna structures (not shown) is arranged in/on the microdrone 2 to drive a linear movement of the microdrone 2 along the z axis. The respective additional pair of motion-promoting antenna structures preferably each have (first) resonance wavelengths different from the (first) resonance wavelengths of each of the motion-promoting antenna structures 12, 14, as well as different from the (first) resonance wavelengths of each of the additional pair of motion-promoting antenna structures described in the previous paragraph.

Fig. 3a and Fig. 3b illustrate the provision of a gradient force for trapping a particle 24 using the trapping-field-promoting antenna structure 10.

The trapping-field-promoting antenna structure 10 of Fig. 3a and Fig. 3b is similar to the trapping-field-promoting antenna structure 10 of Fig. 1. According to the depicted embodiment, it has a (second) resonance wavelength of 980 nm.

Fig. 3a gives the absolute value of the electric field enhancement in the x-y plane along which the trapping-field-promoting antenna structure 10 extends, when the trapping-field-promoting antenna structure 10 is illuminated with light 4 at the (second) resonance wavelength of 980 nm coming in along the z direction. Brighter sections correspond to a higher electric field.

The electric field is the highest at the center of the trapping-field-promoting antenna structure 10, and decays strongly with increasing distance from said center.

The high electric field at the center is attributed to a gap 20 at the center of the trapping-field-promoting antenna structure 10. This gap 20 has a width of 20 nm and separates opposite, triangular-shaped, flat, conductive elements of the trapping-field-promoting antenna structure 10. Consequently, the electric fields resulting from the elements generate an enhanced field strength at the gap 20.

The high electric field at the center is further attributed to the tipped shape of the triangular-shaped, flat, conductive elements towards said center, giving rise to an electric field enhancement at the tips and hence at said center, or at the gap 20, respectively.

The strong decay of the electric field away from the center of the trapping-field-promoting antenna structure 10 gives rise to gradient forces, as illustrated in Fig. 3b.

The lower panel of Fig. 3b illustrates the in-plane gradient force Fxy onto a dielectric particle 24. The brightness indicates the absolute value F of the in-plane gradient force Fxy, wherein brighter sections correspond to stronger forces. Arrows in the lower panel of Fig. 3b give the direction of the in-plane gradient force Fxy.

As can be seen from the lower panel of Fig. 3b, the in-plane gradient force Fxy is directed at the trapping-field-promoting antenna structure 10, or at its center, respectively.

The upper panel of Fig. 3b illustrates the out-of-plane gradient force Fz onto a dielectric particle 24. The brightness indicates the absolute value F of the out-of-plane gradient force Fz, wherein brighter sections correspond to stronger forces. Arrows in the upper panel of Fig. 3b give the direction of the out-of-plane gradient force Fz.

As can be seen from the upper panel of Fig. 3b, the out-of-plane gradient force Fz is directed at the trapping-field-promoting antenna structure 10, or at its center, respectively.

Hence, the trapping-field-promoting antenna structure 10 can effectively trap a particle 24, both along the lateral directions x-y, as well as along the normal direction z, as long as the trapping-field-promoting antenna structure 10 is illuminated with light 4 at the (second) resonance wavelength. The gradient force Fxy, Fz, and hence the trapping, disappears, when the illumination at the (second) resonance wavelength ends/is switched off. In this sense, the trapping is selective under illumination.

Fig. 4a shows a microdrone 2 according to an alternative embodiment.

The microdrone 2 comprises four motion-promoting antenna structures 12, 14, 16, 18. They allow for an optically controlled movement of the microdrone 2 in the x direction, in the y direction (and, consequently, any superposition of the two, or a movement along any direction in between the x and the y direction, respectively), as well as for a controlled rotation of the microdrone 2 around a line parallel to the z axis through the center of mass of the microdrone 2.

According to an embodiment, each of the four motion-promoting antenna structures 12, 14, 16, 18 has a different (first) resonance wavelength, such that each of the four motion-promoting antenna structures 12, 14, 16, 18 can be addressed individually by providing incoming light 4 at the respective first resonance wavelength.

According to a definition, the orientation of any of the motion-promoting antenna structure 12, 14, 16, 18 corresponds to/is defined as the surface normal onto the plane in which the respective motion-promoting antenna structure 12, 14, 16, 18 extends.

In Fig. 4a, the motion-promoting antenna structures 12, 14, 16, 18 extend along the x-y plane, and their orientations correspond to the z direction.

Each of the motion-promoting antenna structures 12, 14, 16, 18 of Fig. 4a comprises a plurality of electrically conductive elements, or, more specifically, at least three electrically conductive elements. In the depicted embodiment, each of the motion-promoting antenna structures 12, 14, 16, 18 of Fig. 4a comprises three electrically conductive elements.

In this sense, the motion-promoting antenna structures 12, 14, 16, 18 of Fig. 4a are similar to the nanoantennas of the embodiments of Fig. 3a, Fig. 3b and of corresponding pars. [0126] - [0130] of WO 2023/094369 A1. According to some embodiments, the motion-promoting antenna structures 12, 14, 16, 18 are formed with one or all the features described in WO 2023/094369 A1 in the context of the respective embodiments.

Fig. 4b shows a microdrone 2 according to an alternative embodiment.

The microdrone 2 according to the embodiment of Fig. 4b is similar to the microdrone 2 according to the embodiment of Fig. 1. However, the trapping-field-promoting antenna structure 10 of Fig. 4b has a disc shape, or a cylindrical shape, rather than a cross shape.

In the embodiment of Fig. 4b, under illumination with circularly polarized light 4 of any helicity, as well as under illumination with linearly polarized light or with light comprising any superposition of linear and/or circular polarizations, the trapping-field-promoting antenna structure 10 acts as an antenna with a similar absorption cross section. An electric field forms at the trapping-field-promoting antenna structure 10, when it is illuminated with incoming light 4 at its (second) resonance wavelength. Gradients of the electric field are the largest along the edges of the trapping-field-promoting antenna structure 10, including the edge along its upper surface, and at the tips of the trapping-field promoting antenna structure 10. The gradients of the electric field result in a gradient force suitable for trapping a polarizable nanoparticle 24 at the respective edge, i.e., on a circular trajectory along the upper surface of the trapping-field-promoting antenna structure 10.

The respective trapping-field-promoting antenna structure 10 is depicted on the microdrone 2 of Fig. 4b in conjunction with motion-promoting antenna structures 12, 14 similar to the ones of the microdrone 2 of Fig. 1. In alternative embodiments (not shown), the respective trapping-field-promoting antenna structure 10 is formed on a microdrone 2 with motion-promoting antenna structures 12, 14, 16, 18 similar to the ones of Fig. 4a.

Fig. 5a to Fig. 5d illustrate in further detail the chirality-dependent response, or the helicitydependent response, respectively, of motion-promoting antenna structures 12.

The gray scale in any of Fig. 5a to Fig. 5d depicts the absolute value E of the electric field at the respective motion-promoting antenna structure 12 under illumination with circularly polarized light 4 at the (first) resonance wavelength of the respective motion-promoting antenna structure 12. The light 4 comes in along the z direction (from +z towards -z). Brighter sections indicate a larger absolute value E of the electric field.

Fig. 5a and Fig. 5b depict a motion-promoting antenna structure 12 according to an embodiment with three electrically conductive elements. In Fig. 5a, the respective motion-promoting antenna structure 12 is illuminated with circularly polarized light 4 of a first helicity, and in Fig. 5b with circularly polarized light 4 of a second helicity opposite to the first helicity.

The motion-promoting antenna structure 12 of Fig. 5a and Fig. 5b is similar to the motion-promoting antenna structure 12 of Fig. 1, Fig. 2a, Fig. 2b and Fig. 4b.

The motion-promoting antenna structure 12 of Fig. 5a and Fig. 5b is mirror symmetric about the y-z plane. When the helicity of the incoming light 4 is reversed, the electric field distribution and the resulting far-field radiation pattern is mirrored about the y-z plane.

Consequently, when the helicity of the incoming light 4 is switched, the x component of the force at the motion-promoting antenna structure 12 of Fig. 5a and Fig. 5b changes its sign, or the force at the motion-promoting antenna structure 12 of Fig. 5a and Fig. 5b is mirrored about the y-z plane, respectively.

Fig. 5c and Fig. 5d depict a motion-promoting antenna structure 12 according to another embodiment with three electrically conductive elements. In Fig. 5d, the respective motion-promoting antenna structure 12 is illuminated with circularly polarized light 4 of the first helicity, and in Fig. 5c with circularly polarized light 4 of the second helicity opposite to the first helicity. The light 4 comes in along the z direction (from +z towards -z).

The motion-promoting antenna structure 12 of Fig. 5c and Fig. 5d is similar to the motion-promoting antenna structure 12, 14, 16, 18 of Fig. 4a.

The motion-promoting antenna structure 12 of Fig. 5c and Fig. 5d is not mirror symmetric about the y-z plane.

The motion-promoting antenna structure 12 of Fig. 5c and Fig. 5d generates a lateral force (i.e., a force in the x-y plane, along which the motion-promoting antenna structure 12 extends) only for one helicity of the incoming, circularly polarized light 4. For the opposite helicity, the lateral force is essentially zero. This is a result of the symmetric far-field radiation pattern emerging from the motion-promoting antenna structure 12 of Fig. 5c and Fig. 5d under illumination with circularly polarized light of the respective helicity.

In other words, when the helicity of the incoming light 4 is switched, the force at the motion-promoting antenna structure 12 of Fig. 5c and Fig. 5d comprises a significant, nonzero component in the x-y plane, in which the motion-promoting antenna structure 12 extends, only for one helicity of the incoming light 4. For incoming light 4 of the opposite helicity, the component of the force at the motion-promoting antenna structure 12 in the x-y plane is essentially zero.

Notably, for the motion-promoting antenna structure 12 according to any of the described embodiments, the spin momentum transfer from circularly polarized photons provides a nonzero background torque contribution. This spin momentum transfer has been neglected in the above discussion. However, simulations can be performed in a straightforward manner to take the spin momentum transfer into account when calculating the forces generated at the motion-promoting antenna structures 12, 14, 16, 18; or using straightforward experiments, the shapes and/or the arrangement of the motion-promoting antenna structures 12, 14, 16, 18 can be modified to compensate for said spin momentum transfer and to arrive at the forces according to the above discussion.

Fig. 6a to Fig 6d show trapping-field-promoting antenna structures 10 of microdrones 2 according to different embodiments.

Fig. 6a to Fig 6d show only a section of the respective microdrones 2. The respective microdrones 2 can be formed with the motion-promoting antenna structures 12, 14, 16, 18 of any of the embodiments described above.

The trapping-field-promoting antenna structures 10 according to Fig. 6a to Fig 6c have spoke-like structures, with different numbers n of elements in an n-fold arrangement. Notably, although depicted as n-fold rotationally symmetric, the arrangement may as well be rotationally unsymmetric, with different angular distance between the elements/spokes.

The elements/spokes are arranged around a gap 20, the gap 20 having a width of approximately 20 nm. The resulting superposition of the electric fields at the elements/spokes in the gap 20 enhances the electric field in the gap 20.

The elements/spokes have a tipped shape towards the gap 20. This enhances the electric field in the gap 20.

Notably, a two-fold spoke-like structure is less preferred, as it would absorb certain light polarizations (e.g., with a polarization direction perpendicular to its longest direction) much less efficient than others (e.g., with a polarization direction along its longest direction), e.g., when at least some of the incoming light is linearly polarized.

For example, when the same laser is used for the trapping-field-promoting antenna structure 10 and to steer the microdrone 2 by controlling the polarization and the intensity of the output of said laser, the trapping strength changes in an undesirable manner when the polarization is changed, as, during the change, a linearly polarized light component may result.

The trapping-field-promoting antenna structure to according to Fig. 6d has a "negative structure", meaning that its conductive material 22 is arranged around a gap 20.

In other words, the trapping-field-promoting antenna structure 10 according to Fig. 6d corresponds to a spoke-like structure wherein n = infinity.

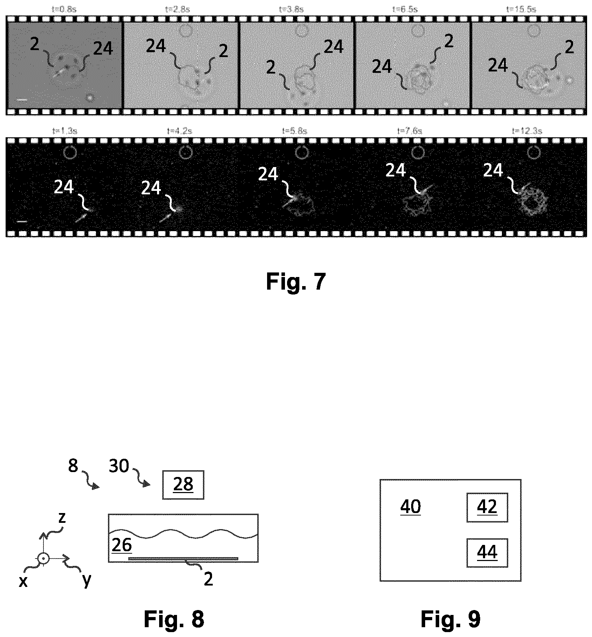

Fig. 7 depicts the results of an experiment, wherein a prototype of a microdrone 2 is used to trap and to transport an individual fluorescent nanodiamond 24 with a diameter of around 70 nm.

The microdrone 2 is similar to the microdrone 2 according to the embodiment of Fig. 4a. Similar experiments, with similar results, have also been performed using a prototype of a microdrone 2 similar to the embodiment of Fig. 1.

Fig. 7 shows a series of images recorded of the microdrone 2 and the fluorescent nanodiamond 24 in solution 26. The fluorescent nanodiamond 24 is made visible by illumination with an excitation laser with a wavelength far from the resonance wavelengths of the antenna structures 10, 12, 14, 16, 18, and capturing the emitted fluorescence light. The images in the upper panel were recorded in bright-field mode. The images in the lower panel were recorded in fluorescence mode, i.e., with a band pass filter permitting only the emitted fluorescence light to pass through it. The images in the lower panel thus show only the fluorescent nanodiamond 24.

While the series of images of Fig. 7 was recorded, circularly polarized light 4 of a first helicity was provided incoming onto the microdrone 2. The intensity of the incoming, circularly polarized light 4 was 3 mW/µm². The incoming, circularly polarized light 4 had a spot size with a diameter of 10 µm, sufficiently large to illuminate the entire microdrone 2.

The wavelength of the incoming, circularly polarized light 4 was selected according to the (first) resonance wavelength of one of the four motion-promoting antenna structures 12, 14, 16, 18.

Hence, the incoming, circularly polarized light 4 generated a torque onto the microdrone 2.

Consequently, the microdrone 2 moves in a narrow circle, with a direction of rotation dictated by the helicity of the incoming, circularly polarized light 4. The corresponding angular velocity is 2.96 rad/s.

Initially, no fluorescence from any nanodiamond 24 is observed. No particle is trapped to the microdrone 2.

Later in the series of images of Fig. 7, a single nanodiamond 24 subject to Brownian motion approaches the microdrone 2.

As the trapping-field-promoting antenna structure 10 has a (second) resonance wavelength corresponding to the wavelength (i.e., the vacuum wavelength) of the incoming, circularly polarized light 4, a gradient force field exists at the trapping-field-promoting antenna structure 10 as described above.

The approaching nanodiamond 24 gets trapped in the gradient force field at the trapping-field-promoting antenna structure 10. Subsequently, it moves along with the microdrone 2 in the narrow circle.

Fig. 8 illustrates a microdrone system 8.

The microdrone system 8 comprises a microdrone 2 according to any of the embodiments described above, and a light source system 30.

The light source system 30 comprises at least one light source 28.

In the depicted embodiment, the microdrone 2 is arranged in a solution 26.

Although the solution is described in the context of the microdrone system 8 of Fig. 8, the microdrone 2 according to any of the embodiments described above may as well be arranged in a solution 26. In particular, the microdrone 2 is arranged in solution 26 during the experiments reported in the context of Fig. 7.

Fig. 9 illustrates a method 40 of fabricating a microdrone 2 adapted to, selectively under illumination, trap and transport a particle 24.

The method 40 comprises, at step 42, forming a plurality of motion-promoting antenna structures 12, 14, 16, 18.

The method 40 comprises, at step 44, forming a trapping-field-promoting antenna structure 10.

Optionally, the method comprises providing a substrate. In respective embodiments, preferably, the plurality of motion-promoting antenna structures is formed on or in the substrate and/or the trapping-field-promoting antenna structure is formed on or in the substrate. Further preferably, the substrate has a shape with a bottom surface of the substrate being larger than any side surface of the substrate, and the trapping-field-promoting antenna structure is formed on the bottom surface of the substrate or on a top surface of the substrate opposite to the bottom surface.

### LIST OF REFERENCE SIGNS

- 2: microdrone
- 4: light incoming onto motion-promoting antenna structure
- 6: substrate
- 8: microdrone system
- 10: trapping-field-promoting antenna structure
- 12, 14, 16, 18: first, second, third, fourth motion-promoting antenna structure
- 20: gap
- 22: conductive, semiconductive, or dielectric material
- 24: particle, diamond particle
- 26: solution
- 28, 30: light source, light source system

## Claims

1. A microdrone (2) adapted to, selectively under illumination, trap and transport a particle (24), the microdrone comprising:
a plurality of motion-promoting antenna structures comprising a first motion-promoting antenna structure (12) and a second motion-promoting antenna structure (14); wherein each of the first and the second motion-promoting antenna structures (12, 14) exhibits a respective optically addressable resonance at a respective first resonance wavelength, and is adapted to scatter incoming, circularly polarized light at the respective first resonance wavelength such that at least a fraction of a momentum of the incoming, circularly polarized light is transferred to the microdrone (2); and
a trapping-field-promoting antenna structure (10) exhibiting an optically addressable resonance at a second resonance wavelength; wherein the trapping-field-promoting antenna structure (10) is adapted to provide, under illumination with incoming light at the second wavelength, a gradient force directed at the trapping-field promoting antenna structure both for left-handed circularly polarized incoming light at the second wavelength and for right-handed circularly polarized incoming light at the second wavelength.

2. The microdrone (2) according to claim 1,
wherein the first motion-promoting antenna structure (12) extends along a first plane (x-y) or along a plurality of first planes (x-y) parallel to each other, in particular, wherein the first motion-promoting antenna structure (12) does not have a continuous or discrete rotational symmetry around any axis (z) perpendicular to the first plane (x-y); and/or
wherein the second motion-promoting antenna structure (14) extends along a second plane (x-y) or along a plurality of second planes (x-y) parallel to each other, in particular, wherein the second plane(s) (x-y) is/are parallel to the first plane (x-y) or to at least one of the first planes (x-y), and/or the second motion-promoting antenna structure (14) does not have a continuous or discrete rotational symmetry around any axis (z) perpendicular to the second plane (x-y); and/or
wherein the plurality of motion-promoting antenna structures comprises at least four or at least six or at least eight or at least ten or at least twelve motion-promoting antenna structures; and/or
wherein the trapping-field-promoting antenna structure (10) extends along a third plane (x-y), and wherein, optionally:
around any axis (z) perpendicular to the third plane (x-y) the trapping-field-promoting antenna structure (10) does not have a two-fold rotational symmetry as its highest rotational symmetry; and/or
the trapping-field-promoting antenna structure (10) has at least a three-fold rotational symmetry around an axis (z) perpendicular to the third plane (x-y); and/or
the third plane (x-y) is parallel or coplanar to the first plane (x-y) or to at least one of the first planes (x-y); and/or
the third plane (x-y) is parallel or coplanar to the second plane (x-y) or to at least one of the second planes (x-y); and/or
the trapping-field-promoting antenna structure (10), or, if a plurality of respective trapping-field-promoting antenna structures (10) are comprised in the microdrone (2), an arrangement of the plurality of trapping-field-promoting antenna structures (10), has a center of mass which coincides with a center of mass of the microdrone (2) and/or which is located above a center of mass of the microdrone (2).

3. The microdrone (2) according to claim 1 or claim 2,
wherein the first resonance wavelength of the first motion-promoting antenna structure (12) and the first resonance wavelength of the second motion-promoting antenna structure (14) are essentially equal to each other, for example within +/- 10% or within +/- 5% or within +/- 3% or within +/- 1% of the first resonance wavelength of the first motion-promoting antenna structure (12), or wherein the first resonance wavelength of the first motion-promoting antenna structure (12) and the first resonance wavelength of the second motion-promoting antenna structure (14) differ from each other, for example by at least +/- 1% or by at least +/- 3% or by at least +/- 5% or by at least +/- 10% of the first resonance wavelength of the first motion-promoting antenna structure (12); and/or,
wherein the first resonance wavelength of the first motion-promoting antenna structure (12) and/or the first resonance wavelength of the second motion-promoting antenna structure (14) essentially equal(s) the second resonance wavelength, for example within +/- 10% or within +/- 5% or within +/- 3% or within +/- 1% of the second resonance wavelength; and/or
wherein each of the motion-promoting antenna structures (12, 14) is shaped to, for incoming, circularly polarized light (4) at the first resonance wavelength of the respective motion-promoting antenna structure (12, 14) with said incoming light (4) having a light propagation direction (k0-l, k0-r), scatter said incoming light (4) to a well-defined direction, wherein a component of the well-defined direction along a plane (x-y) perpendicular to the light propagation direction (k0-l, k0-r) depends on the helicity of said incoming light (4), wherein, optionally, the light propagation direction (k0-l, k0-r) is perpendicular to a plane (x-y) along which the respective motion-promoting antenna (12, 14) structure extends; and/or
wherein the trapping-field-promoting antenna structure (10) and/or each of the motion-promoting antenna structures (12, 14) have/has a width of no more than 5 µm or no more than 2 µm or no more than 1 µm; and/or
wherein the first motion-promoting antenna structure (12) and the second motion-promoting antenna structure (14), together, are adapted to drive a motion of the microdrone (2) according to a first degree of freedom under illumination with circularly polarized light having a first helicity, and to drive a motion of the microdrone (2) according to a second degree of freedom different from the first degree of freedom under illumination with circularly polarized light having a second helicity opposite to the first helicity.

4. The microdrone (2) according to claim 1 or claim 2,
wherein the first resonance wavelength of the first motion-promoting antenna structure (12) and the first resonance wavelength of the second motion-promoting antenna structure (14) are essentially equal to each other, for example within +/- 10% or within +/- 5% or within +/- 3% or within +/- 1% of the first resonance wavelength of the first motion-promoting antenna structure (12), or wherein the first resonance wavelength of the first motion-promoting antenna structure (12) and the first resonance wavelength of the second motion-promoting antenna structure (14) differ from each other, for example by at least +/- 1% or by at least +/- 3% or by at least +/- 5% or by at least +/- 10% of the first resonance wavelength of the first motion-promoting antenna structure (12); and/or
wherein the first resonance wavelength of the first motion-promoting antenna structure (12) and/or the first resonance wavelength of the second motion-promoting antenna structure (14) differ(s) from the second resonance wavelength, for example by at least +/- 1% or by at least +/- 3% or by at least +/- 5% or by at least +/- 10% of the second resonance wavelength; and/or
wherein the plurality of motion-promoting antenna structures (12, 14) comprises a third motion-promoting antenna structure (16) and a fourth motion-promoting antenna structure (18), wherein each of the third and the fourth motion-promoting antenna structures (16, 18) exhibits a respective optically addressable resonance at a respective first resonance wavelength, and is adapted to scatter incoming, circularly polarized light at the respective first resonance wavelength such that at least a fraction of a momentum of the incoming, circularly polarized light is transferred to the microdrone (2); wherein, preferably, the first resonance wavelengths of at least two or all of the following differ from each other: the first motion-promoting antenna structure (12), the second motion-promoting antenna structure (14), the third motion-promoting antenna structure (16), and the fourth motion-promoting antenna structure (18); for example, wherein they differ from each other by at least +/- 1% or by at least +/- 3% or by at least +/- 5% or by at least +/- 10% of the first resonance wavelengths of the first motion-promoting antenna structure (12), of the second motion-promoting antenna structure (14), of the third motion-promoting antenna structure (16), or of the fourth motion-promoting antenna structure (18).

5. The microdrone (2) according to any of the preceding claims,
wherein the trapping-field-promoting antenna structure (10) is arranged at a distance (d1, d2) from the first motion-promoting antenna structure (12) and/or from the second motion-promoting antenna structure (14), in particular, at a distance of at least 0.2 µm or of at least 0.4 µm or of at least 0.6 µm; and/or
wherein the trapping-field-promoting antenna structure (10) is shaped to provide, under illumination with incoming light (4) at the second wavelength, both for left-handed circularly polarized incoming light and for right-handed circularly polarized incoming light at the second wavelength, a near field with an enhanced field gradient as compared to a field gradient of the incoming light at the second wavelength prior to impinging on the trapping-field-promoting antenna structure, and wherein the near field with the enhanced field gradient provides the gradient force directed at the center of the trapping-field promoting antenna structure; and/or
wherein said gradient force is directed at a center of the trapping-field promoting antenna structure (10); and/or
wherein the trapping-field-promoting antenna structure (10) is adapted to provide, under illumination with the incoming light at the second wavelength, a gradient force directed at the trapping-field promoting antenna structure both for incoming light at the second wavelength having a first linear polarization and for incoming light at the second wavelength having a second linear polarization perpendicular to the first linear polarization.

6. The microdrone (2) according to any of the preceding claims,
wherein the trapping-field-promoting antenna structure (10) has a shape corresponding to an n-fold spoke structure, wherein n is at least three; and/or
wherein the trapping-field-promoting antenna structure (10) comprises a number n of elements extending away from a center of the trapping-field-promoting antenna structure (10), wherein n is at least three, wherein, preferably, the n elements extend in a plane (x-y); and/or
wherein the trapping-field-promoting antenna structure (10) has a shape corresponding to a cross, and/or the trapping-field-promoting antenna structure (10) comprises four elements extending away from a center of the trapping-field-promoting antenna structure, wherein, preferably, the four elements extend in a plane (x-y);
wherein, optionally, said elements have a tipped shape, preferably towards a same region, wherein, optionally, said region defines a trapping position for the particle.

7. The microdrone (2) according to claim 6, wherein the trapping-field-promoting antenna structure (10) comprises a conductive, semiconductive, or dielectric material (22) forming said shape and/or elements, and wherein the trapping-field-promoting antenna structure (10) further comprises a gap (20) at its center; wherein, preferably, the conductive, semiconductive, or dielectric material (22) is a conductive material (22) and/or the gap (20) corresponds to a region not comprising the conductive, semiconductive, or dielectric material (22) and/or the gap (20) has a width of no more than 100 nm or no more than 60 nm or no more than 40 nm.

8. The microdrone (2) according to claim 6, wherein the trapping-field-promoting antenna structure (10) comprises a conductive, semiconductive, or dielectric material (22), and wherein said shape and/or elements correspond(s) to regions surrounded by the conductive, semiconductive, or dielectric material (22); wherein, preferably, the conductive, semiconductive, or dielectric material (22) is a conductive material (22) and/or said shape and/or elements correspond(s) to a region/regions not comprising the conductive, semiconductive, or dielectric material (22).

9. The microdrone (2) according to any of the preceding claims,
wherein the microdrone (2) is adapted to, selectively under illumination, trap and transport a diamond particle (24) with a diameter of 70 nm; and/or
wherein the microdrone (2) is adapted to, selectively under illumination, trap and transport the particle (24) in solution (26) and/or at a temperature of the trapping-field-promoting antenna structure of at least 274 K.

10. The microdrone (2) according to any of the preceding claims, the microdrone (2) comprising a substrate (6) that the plurality of motion-promoting antenna structures (12, 14, 16, 18) and the trapping-field-promoting antenna structure (10) are formed on or in;
wherein the substrate (6) extends along a plane (x-y), and the substrate has a thickness perpendicular to the plane, wherein the thickness is smaller than the extension of the substrate (6) along any direction within the plane (x-y) and/or the thickness is in a range from 20 nm to 10 µm; and/or
wherein the substrate (6) is transparent at the second resonance wavelength and/or at the first resonance wavelength of the first and/or of the second motion-promoting antenna structure, for example with a transmittance of at least 30% or of at least 50% or of at least 70% or of at least 85%; and/or
wherein along any spatial direction, an extension of the substrate (6) and/or of the microdrone (2) does not exceed 1 mm or does not exceed 0.1 mm or does not exceed 0.03 mm; and/or
wherein the substrate (6) extends along a plane (x-y), wherein said plane (x-y) is parallel, and optionally coplanar, to the first plane (x-y) and/or to the second plane (x-y) and/or to the third plane (x-y) of claim 2.

11. A microdrone system (8), comprising:
the microdrone (2) according to any of the preceding claims, and
a light source system (30) comprising at least one light source (28), wherein the light source system (30) is adapted to illuminate the microdrone (2) with light of controllable intensity at the second resonance wavelength and to illuminate the microdrone (2) with light of controllable helicity at the first resonance wavelength of the first motion-promoting antenna structure and at the first resonance wavelength of the second motion-promoting antenna structure.

12. Use of the microdrone (2) or of the microdrone system (8) according to any of the preceding claims for, selectively under illumination, trapping and transporting a particle (24).

13. The use according to claim 12,
wherein a helicity and an intensity of the illumination are controlled to control a motion of the microdrone (2), and wherein the trapping of the particle is controlled using the intensity of the illumination, wherein, preferably, the particle is trapped and transported in solution (26); and/or
wherein a helicity of the illumination is controlled to control a motion of the microdrone (2), and wherein an intensity of the illumination is controlled to control the trapping of the particle, wherein, preferably, the particle is trapped and transported in solution (26); and/or
wherein the first motion-promoting antenna structure (12) and the second motion-promoting antenna structure (14) are smaller than the first wavelength, and/or wherein the trapping-field-promoting antenna structure (10) is smaller than the second wavelength.

14. A method (40) of fabricating a microdrone (2) adapted to, selectively under illumination, trap and transport a particle (24), the method (40) comprising:
forming a plurality of motion-promoting antenna structures (12, 14, 16, 18) comprising a first motion-promoting antenna structure (12) and a second motion-promoting antenna structure (14); wherein each of the first and the second motion-promoting antenna structures (12, 14) exhibits a respective optically addressable resonance at a respective first resonance wavelength, and is adapted to scatter incoming, circularly polarized light (4) at the respective first resonance wavelength such that at least a fraction of a momentum of the incoming, circularly polarized light is transferred to the microdrone (2); and
forming a trapping-field-promoting antenna structure (10) exhibiting an optically addressable resonance at a second resonance wavelength; wherein the trapping-field-promoting antenna structure (10) is adapted to provide, under illumination with incoming light at the second wavelength, a gradient force directed at a center of the trapping-field promoting antenna structure (10) both for left-handed circularly polarized incoming light at the second wavelength and for right-handed circularly polarized incoming light at the second wavelength.

15. The method (40) according to claim 14,
wherein the plurality of motion-promoting antenna structures (12, 14, 16, 18) and the trapping-field-promoting antenna structure (10) are formed from a same material; and/or
wherein the method comprises at least one common fabrication step contributing to both forming the plurality of motion-promoting antenna structures (12, 14, 16, 18) and forming the trapping-field-promoting antenna structure (10), in particular, wherein in the at least one common fabrication step a material of the plurality of motion-promoting antenna structures (12, 14, 16, 18) and a material of the trapping-field-promoting antenna structure (10) is deposited and/or shaped synchronously; and/or
wherein the method comprises providing a substrate; wherein, optionally the plurality of motion-promoting antenna structures is formed on or in the substrate and/or the trapping-field-promoting antenna structure is formed on or in the substrate; wherein, preferably, the substrate has a shape with a bottom surface of the substrate being larger than any side surface of the substrate, and wherein the trapping-field-promoting antenna structure is formed on the bottom surface of the substrate or on a top surface of the substrate opposite to the bottom surface.
